# EUROPÄISCHE PATENTSCHRIFT

(11) **EP 1 647 655 B1**
(45) Veröffentlichungstag und Bekanntmachung des Hinweises auf die Patenterteilung: **24.12.2014**
(21) Anmeldenummer: 05019301.0
(22) Anmeldetag: 06.09.2005
(51) Int. Cl.: H02K 15/00, H02K 1/27, H02K 3/18, H02K 3/28, H02K 7/09, H02K 16/00, E05D 15/06, E05F 15/18, H02K 41/03, H02N 15/00

(54) **Schiebetür mit einem Antriebssystem mit einer Magnetreihe**
Sliding door with a drive system with a magnet array
Porte coulissante avec système d'entraînement avec réseau magnétique

(30) Priorität: 17.10.2004 DE 102004050337
(43) Veröffentlichungstag der Anmeldung: 19.04.2006
(73) Patentinhaber: Dorma GmbH + Co. KG, 58256 Ennepetal (DE)
(72) Erfinder: Busch, Sven, 44139 Dortmund (DE)

(56) Entgegenhaltungen:
- WO-A1-2004/093301
- DE-A1- 19 725 525
- DE-C1- 19 618 518
- US-A1- 2004 256 919

## Beschreibung

Die Erfindung betrifft eine Schiebetür mit einem magnetischen Antriebssystem für mindestens einen Türflügel, mit einer Linear-Antriebseinheit mit mindestens einer Magnetreihe. Der Begriff der Magnetreihe umfasst auch längliche Einzelmagneten. Die Magnetreihe kann ortsfest oder ortsveränderlich angeordnet sein.

Aus der DE 40 16 948 A1 ist eine Schiebetürführung bekannt, bei der miteinander zusammenwirkende Magnete bei normaler Belastung eine berührungsfreie schwebende Führung eines in einer Schiebeführung gehaltenen Türflügels oder dergleichen bewirken, wobei neben den stationär angeordneten Magneten der Schiebeführung ein Ständer eines Linearmotors angeordnet ist, dessen Läufer an der Schiebetür angeordnet ist. Durch die gewählte V-förmige Anordnung der Permanentmagnete der offenbarten permanent erregten magnetischen Trageinrichtung kann keine seitlich stabile Führungsbahn realisiert werden, weswegen eine relativ komplizierte Anordnung und Ausgestaltung von Ständer und Läufer erforderlich ist. Diese Anordnung verteuert eine solche Schiebetür enorm.

Aus der WO 00/50719 A1 ist ein kombiniertes Lager- und Antriebssystem für eine automatisch betriebene Tür bekannt, bei der ein permanent erregtes magnetisches Tragsystem symmetrisch aufgebaut ist und ortsfeste und ortsveränderbare Magnetreihen aufweist, die jeweils in einer Ebene angeordnet sind, wobei sich das Tragsystem in einem labilen Gleichgewicht befindet und bei dem das Tragsystem symmetrisch angeordnete seitliche Führungselemente aufweist, die rollenförmig gelagert sein können. Aufgrund der hierdurch erreichten seitlich stabilen Führungsbahn ergibt sich eine einfache Ausgestaltung und Anordnung von Ständer und Läufer eines in einem gemeinsamen Gehäuse untergebrachten Linearmotors, nämlich die Möglichkeit, Ständer und Läufer des Linearmotors in Bezug auf das Tragsystem beliebig anordnen zu können und hinsichtlich der Formgebung von Ständer und Läufer nicht durch das Tragsystem beschränkt zu sein.

Diesen beiden Lagersystemen gemeinsam ist, dass sie nach dem Prinzip der abstoßenden Kraftwirkung arbeiten, welches Wirkprinzip einen stabilen Schwebezustand ohne aufwendige elektrische Regeleinrichtung ermöglicht. Nachteilig hieran ist jedoch, dass sowohl mindestens eine ortsfeste als auch mindestens eine ortsveränderbare Magnetreihe vorhanden sein muss, d. h. über den gesamten Weg der Schiebeführung bzw. des Lagers der automatisch betriebenen Tür und an dem entlang dieser Führung beweglichen Tragschlitten für die Tür Magnete angeordnet sein müssen, wodurch sich ein solches System, das sich aufgrund des Wegfalls der mechanischen Reibung zum Tragen der Tür durch extreme Leichtgängigkeit und geräuschlose Arbeitsweise auszeichnet und nahezu verschleiß- und wartungsfrei ist, in der Herstellung sehr teuer wird.

Aus der DE 196 18 518 C1 ist weiter ein elektromagnetisches Antriebssystem für magnetische Schwebe- und Tragsysteme bekannt, bei dem durch eine geeignete Anordnung von Dauermagnet und ferromagnetischem Material ein stabiler Schwebe- und Tragzustand erreicht wird. Hierzu versetzt der Dauermagnet das ferromagnetische Material in den Zustand einer magnetischen Teilsättigung. Elektromagnete sind so angeordnet, dass die Dauermagnete allein durch eine Änderung der Sättigung in der Tragschiene bewegt werden und die Spulenkerne sind in die dauermagnetische Teilsättigung, die zum Schwebe- und Tragezustand führt, mit einbezogen.

Weiter zeigt die WO 94/13055 einen Ständerantrieb für einen elektrischen Linearantrieb und eine mit einem solchen Ständer versehene Tür, die mittels Magneten im Türsturz eines Rahmens aufgehängt ist. Hierfür sind an der Türfüllung mehrere Magnete oder Magnetgruppen angeordnet, deren magnetische Feldstärke so groß ist, dass eine Anziehungskraft zu einer Führungsplatte erreicht wird, die an der Unterseite des Türsturzes angeordnet ist, wobei die Anziehungskraft ausreicht, um das Gewicht der Türfüllung anzuheben.

Alle diese Systeme benötigen aufgrund der gewählten Anordnungen des magnetischen Antriebes große Mengen an Kupferdraht für die Spulen, mit denen die Magnetfelder für den Vortrieb erzeugt werden, wodurch eine solche Schiebetür in der Herstellung sehr teuer wird.

Es ist daher die Aufgabe der Erfindung, eine Schiebetür mit einem magnetischen Antriebssystem für mindestens einen Türflügel, das eine Linear-Antriebseinheit mit mindestens einer Magnetreihe aufweist, so weiterzuentwickeln, dass die zuvor genannten Vorteile bei geringen Herstellungskosten bestehen bleiben.

Gelöst wird diese Aufgabe mit den im Patentanspruch 1 angegebenen Merkmalen. Vorteilhafte Ausgestaltungen des Gegenstandes des Patentanspruches 1 sind in den Unteransprüchen angegeben.

Die erfindungsgemäße Schiebetür mit einem magnetischen Antriebssystem für mindestens einen Türflügel, mit einer Linear-Antriebseinheit, die mindestens eine in Antriebsrichtung angeordnete Magnetreihe, deren Magnetisierung in ihrer Längsrichtung in bestimmten Abständen das Vor zeichen wechselt und mindestens eine Spulenanordnung aufweist, die bei entsprechender Ansteuerung eine Wechselwirkung mit der mindestens einen Magnetreihe bewirkt, die Vorschubkräfte hervorruft, wobei die Spulenanordnung eine Anzahl von Spulenkernen aufweist, von denen nur jeder zweite mit einer Spulenwicklung versehen ist, weist gegenüber dem Stand der Technik den Vorteil auf, dass die Herstellungskosten durch das Vorsehen von Spulenwicklungen auf nur jedem zweiten Spulenkern erheblich gesenkt werden, wobei die Eigenschaften des Antriebssystemes hinsichtlich von dessen Rastkräften nicht verändert werden, da die Spulenkerne nach wie vor vorgesehen sind. Weiter bleiben durch die Ausdehnung der mindestens einen Magnetreihe insbesondere bei einem dreiphasigen System alle Antriebsphasen erhalten.

Erfindungsgemäß wird die Spulenanordnung vorzugsweise dreiphasig angesteuert, damit alle Antriebsphasen erhalten bleiben.

Alternativ oder zusätzlich füllt nach der Erfindung vorzugsweise eine Spulenwicklung im Wesentlichen den Raum zwischen zwei Spulenkernen aus. Hierdurch wird im Vergleich mit einer herkömmlichen Wicklung, bei der jeder Spulenkern mit einer Spule versehen ist, die gleiche Durchflutungsfläche erhalten, wobei aber 25 % der benötigten Kupfermenge eingespart werden.

Nach der Erfindung besteht die mindestens eine Magnetreihe vorzugsweise aus einem oder mehreren Hochleistungsmagneten, vorzugsweise Seltenerden-Hochleistungsmagneten, weiter vorzugsweise aus Neodym-Eisen-Bor (NeFeB) bzw. Samarium-Cobalt (Sm₂Co) oder kunststoffgebundenen Magnetwerkstoffen. Durch die Verwendung von solchen Hochleistungsmagneten lassen sich wegen der höheren Remanenzinduktion wesentlich höhere Kraftdichten erzeugen als mit Ferrit-Magneten. Demzufolge lässt sich das Magnetsystem bei gegebener Tragkraft mit Hochleistungsmagneten geometrisch klein und damit platzsparend aufbauen. Die gegenüber Ferrit-Magneten höheren Materialkosten der Hochleistungsmagnete werden durch das vergleichsweise geringe Magnetvolumen zumindest kompensiert.

Das erfindungsgemäße Antriebssystem oder kombinierte Trag- und Antriebssystem wird zum Antrieb mindestens eines Türflügels einer Schiebetür eingesetzt, die vorzugsweise als Bogenschiebetür oder Horizontal-Schiebewand ausgebildet ist. Es kann neben diesem Einsatz auch zum Antrieb von Torflügeln oder in Zuführeinrichtungen, Handlingseinrichtungen oder Transportsystemen eingesetzt werden.

Die Erfindung wird nun anhand von schematisch dargestellten Ausführungsbeispielen näher beschrieben.

Dabei zeigen:
- Figur 1:: Einen Querschnitt einer ersten bevorzugten Ausführungsform der erfindungsgemäß bevorzugt verwendeten magnetischen Trageinrichtung in verschiedenen Belastungszuständen,
- Figur 2:: die Tragkraftkennlinie der magnetischen Trageinrichtung nach der in Figur 1 gezeigten ersten bevorzugten Ausführungsform,
- Figur 3:: den Querkraftverlauf der magnetischen Trageinrichtung nach der in Figur 1 gezeigten ersten bevorzugten Ausführungsform,
- Figur 4:: eine Schnittdarstellung einer Draufsicht der magnetischen Trageinrichtung nach der in Figur 1 gezeigten ersten bevorzugten Ausführungsform,
- Figur 5:: eine Schnittdarstellung einer Draufsicht der ersten bevorzugten Ausführungsform des erfindungsgemäß bevorzugt verwendeten kombinierten Trag- und Antriebssystemes,
- Figur 6:: eine elektrische Verschaltung der Spulen der Linear-Antriebseinheit des in Figur 5 gezeigten kombinierten Trag- und Antriebssystemes,
- Figur 7:: ein Diagramm zur Erläuterung einer ersten Möglichkeit des Spannungsverlaufes an den wie in Figur 6 gezeigt verschalteten Spulen der ersten bevorzugten Ausführungsform des erfindungsgemäßen Antriebssystemes,
- Figur 8:: ein Diagramm zur Erläuterung einer zweiten Möglichkeit des Spannungsverlaufes an den wie in Figur 6 gezeigt verschalteten Spulen der ersten bevorzugten Ausführungsform des erfindungsgemäßen Antriebssystemes,
- Figur 9:: ein Diagramm zur Erläuterung einer dritten Möglichkeit des Spannungsverlaufes an den wie in Figur 6 gezeigt verschalteten Spulen der ersten bevorzugten Ausführungsform des erfindungsgemäßen Antriebssystemes,
- Figur 10:: eine Anordnung einer Spulenanordnung bei einer Schiebetür nach dem Stand der Technik,
- Figur 11:: eine Anordnung einer Spulenanordnung bei einer beispielhaften Schiebetür und
- Figur 12:: eine Anordnung einer Spulenanordnung bei einer Schiebetür nach einer bevorzugten Ausführungsform der Erfindung.

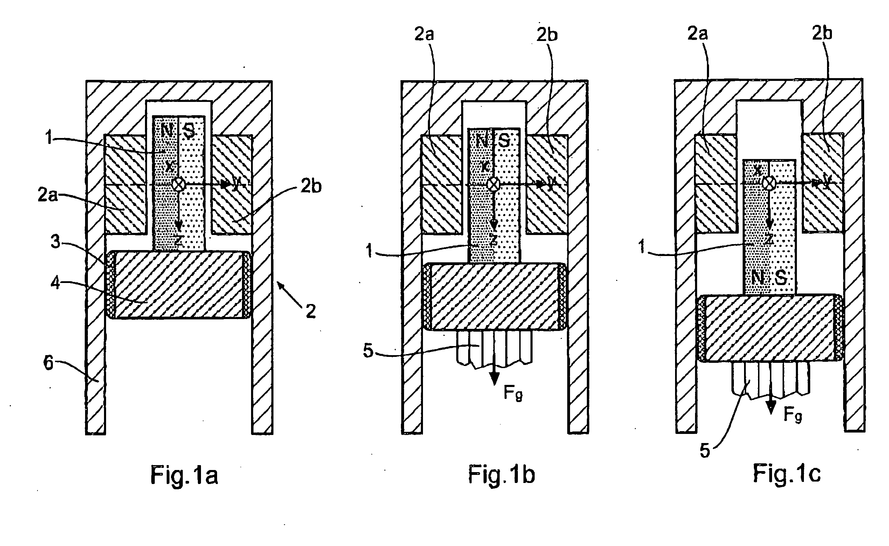

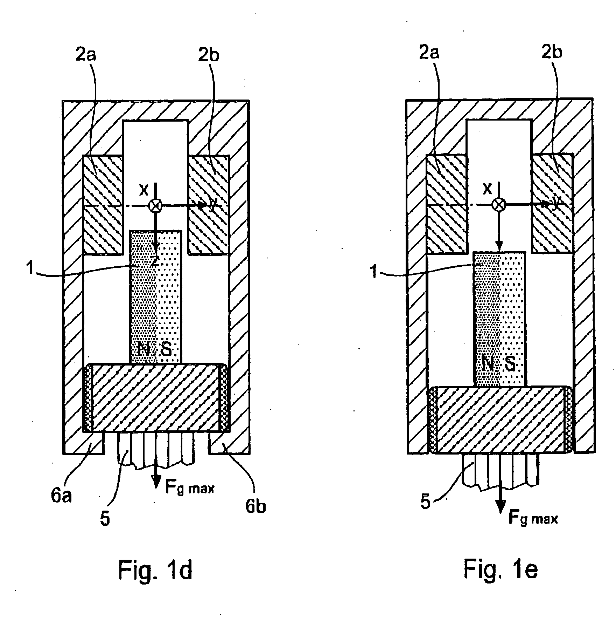

Die Figur 1 zeigt eine schematische Prinzipdarstellung einer ersten bevorzugten Ausführungsform der erfindungsgemäß bevorzugt verwendeten magnetischen Trageinrichtung im Querschnitt. Zur Erläuterung ist ein Koordinatensystem eingezeichnet, bei dem eine x-Richtung eine Fahrtrichtung eines an der erfindungsgemäßen Trageinrichtung aufgehängten Türflügels 5 darstellt. Die Richtung der auf die magnetische Trageinrichtung wirkenden Querkräfte ist die y-Richtung und die durch das Gewicht der aufgehängten Türflügel 5 bedingte vertikale Magnetauslenkung nach unten ist in z-Richtung eingezeichnet.

Eine an einem Tragschlitten 4 befestigte Magnetreihe 1 wird durch ein an dem Tragschlitten 4 vorgesehenes mechanisches Führungsetement 3, das mit einem Gehäuse 6 der Trageinrichtung zusammenwirkt, in horizontaler Richtung zentriert zwischen weichmagnetischen Tragschienen 2a, 2b, die das Tragelement 2 bilden, zwangsgeführt, während sie in vertikaler Richtung und in Fahrtrichtung (x) des Türflügels 5 frei verschiebbar ist. Durch die so erzwungene Symmetrie heben sich die in y-Richtung an den Magneten 1 a, 1 b, 1c, 1 d angreifenden Querkräfte weitgehend auf. In vertikaler Richtung (z-Richtung) nehmen die Magnete 1a, 1b, 1c, 1d nur im lastfreien Zustand, also ohne an dem Tragschlitten 4 befestigte Last, wie in der Figur 1a) gezeigt, eine symmetrische Lage ein.

Bei Belastung der Magnete 1a, 1b, 1c, 1d mit einer Gewichtskraft Fg, z. B. durch den an dem Tragschlitten 4 befestigten Türflügel 5, werden diese in vertikaler Richtung aus der in Figur 1a) gezeigten symmetrischen Lage über einen in Figur 1b) gezeigten Zwischenzustand in eine in Figur 1c) gezeigte Gleichgewichtslage bewegt, die durch die zu tragende Gewichtskraft F_{g} und eine magnetische Rückstellkraft zwischen den Magneten 1a, 1b, 1c, 1d der Magnetreihe 1 und den Tragschienen 2a, 2b des Tragelementes 2, im Folgenden auch als Tragkraft F(z) bezeichnet, bestimmt ist. Die Ursache dieser Rückstellkraft sind die zwischen den Magneten 1a, 1b, 1c, 1d der Magnetreihe 1 und den Tragschienen 2a, 2b wirkenden magnetischen Anziehungskräfte, wobei nur der Teil der Magnete 1 a, 1 b, 1 c, 1 d, der zwischen den Tragschienen 2a, 2b nach unten heraustritt, zu dieser magnetischen Tragkraft beiträgt. Da dieser Teil mit größer werdender vertikaler Auslenkung zunimmt, steigt die magnetische Tragkraft dem Betrag nach kontinuierlich mit der Auslenkung an.

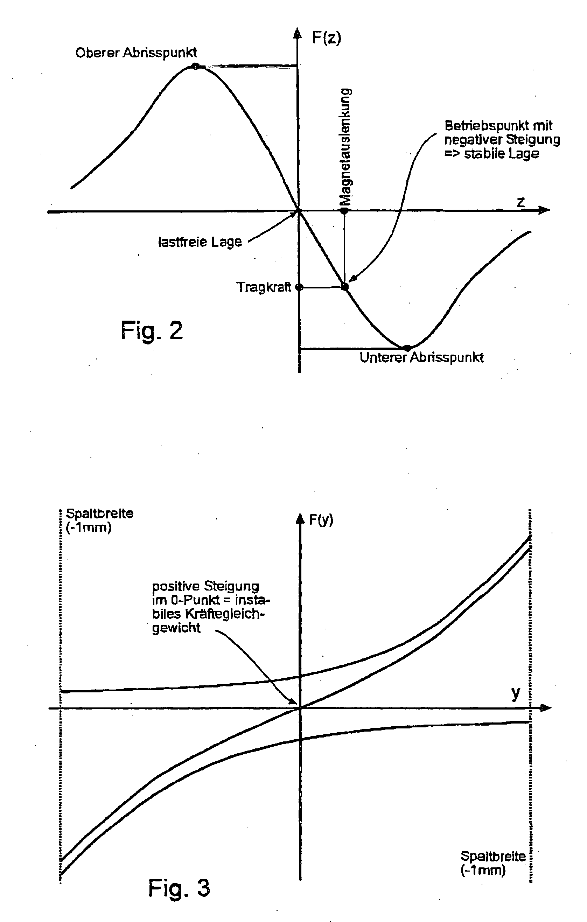

Figur 2 zeigt die Abhängigkeit zwischen der vertikalen Auslenkung der Magnetreihe 1 und der magnetischen Tragkraft in einer Kennlinie, d. h. die Tragkraftkennlinie der Trageinrichtung gemäß der in Figur 1 gezeigten Ausführungsform. Auf der Abszisse ist die vertikale Auslenkung z nach unten, z. B. in mm und auf der Ordinate die korrespondierende erzeugte magnetische Tragkraft F(z), z. B. in Newton, angegeben. Der Verlauf der Tragkraftkennlinie ist durch einen oberen und einen unteren Abrisspunkt gekennzeichnet, die jeweils erreicht werden, wenn die Magnete zwischen den Tragschienen nach oben bzw. nach unten vollständig heraustreten, wie es für den Fall nach unten in Figur 1e) gezeigt ist. Wird diese kritische Auslenkung kraftbedingt überschritten, so schwächen sich die Rückstellkräfte durch den zunehmenden Abstand zu den Tragschienen 2a, 2b ab, wodurch in diesen Bereichen kein stabiler Gleichgewichtszustand zwischen der Tragkraft F(z) und der durch die Last bedingten Gewichtskraft Fg erreicht werden kann.

In der Praxis kann ein solches Abreißen der Tragkraft F(z) durch die Gewichtskraft Fg der Türflügelmasse durch eine mechanische Begrenzung der möglichen Auslenkung der Magnetreihe 1 zuverlässig verhindert werden, wie sie beispielhaft in Figur 1d) gezeigt ist. Hier umfasst das die Tragschienen 2a, 2b aufnehmende und eine horizontale Führung für das Führungselement 3 bietende Gehäuse 6 gleichzeitig zwei jeweils an seinen unteren Enden angeordnete Vorsprünge 6a, 6b, die eine mechanische Begrenzung der möglichen Auslenkung des Tragschlittens 4 und somit der an diesem starr befestigten Magnetreihe 1 in z-Richtung sind.

Zwischen dem oberen Abrisspunkt und dem unteren Abrisspunkt verläuft die Tragkraftkennlinie nahezu linear, wobei bei einer positiven Auslenkung der Magnetreihe 1, d. h. einer Auslenkung nach unten, die durch den am Tragschlitten 4 befestigten Türflügel 5 erfolgt, von dem Ursprung des Koordinatensystemes zwischen vertikaler Auslenkung z der Magnetreihe 1 und magnetischer Tragkraft F(z) bis zu dem unteren Abrisspunkt auf der Tragkraftkennlinie Betriebspunkte mit negativer Steigung durchfahren werden, in denen sich eine jeweilige stabile Lage der Magnetreihe 1 zwischen den Tragschienen 2a, 2b, bedingt durch die auf die Magnetreihe 1 wirkende Gewichtskraft F_{g} und der betragsgleichen, in entgegengesetzte Richtung wirkende magnetische Tragkraft F(z) einstellen kann.

Bei strenger Symmetrie der beschriebenen magnetischen Trageinrichtung um die vertikale Mittelachse (z-Achse), die sowohl von der Anordnung der Trageinrichtung als auch dem mechanischen Führungselement 3 abhängt, heben sich die horizontalen Magnetkraft-Komponenten in Querrichtung, d. h. in y-Richtung, vollständig auf. Verlässt die Magnetreihe 1 toleranzbedingt diese exakte Mittellage, so stellt sich aufgrund unterschiedlich starker Anziehungskräfte zu den beiden Tragschienen 2a, 2b eine auf die Magnetreihe 1 wirkende Querkraft F(y) ein.

Die Figur 3 zeigt für eine Spaltbreite von z. B. -1 mm bis +1 mm einen Querkraftverlauf F(y) in Abhängigkeit von einer seitlichen Verschiebung y der Magnete 1a, 1b, 1c, 1d, der über den ganzen Verlauf eine positive Steigung hat. Das bedeutet, dass im Null-Punkt des Koordinatensystemes, der zur Mittellage der Magnetreihe 1 zwischen den Tragschienen 2a, 2b korrespondiert, ein instabiles Kräftegleichgewicht vorliegt. In allen anderen Punkten des Koordinatensystemes herrscht eine resultierende Querkraft F(y).

Da in der Mittellage nur ein instabiles Kräftegleichgewicht vorliegt, muss das Führungselement 3 eine präzise mechanische Lagerung bieten, die die Magnetreihe 1 während der Fahrbewegung der Magnetreihe 1 in Bewegungsrichtung, d. h. in x-Richtung, exakt mittig zwischen den Tragschienen 2a, 2b führt. Je genauer diese Zentrierung realisiert werden kann, umso geringer sind die resultierende Querkraft F(y) und hiermit verbundene Reibungskräfte der mechanischen Lagerung.

Um die Trageigenschaften zu optimieren, sollte die Magnetbreite, d. h. die Abmessungen der Magnetreihe 1 bzw. von deren Einzelmagneten 1a, 1b, 1c, 1d in y-Richtung, möglichst groß sein, denn eine große Magnetbreite bewirkt eine große Feldstärke, die zu großen Tragkräften führt. Die Magnethöhe, also die Abmessungen der Magnetreihe bzw. von deren Einzelmagneten 1a, 1b, 1c. 1d in z-Richtung, sollte möglichst klein sein, denn kleine Magnethöhen erhöhen die Steifigkeit des Tragkraftfeldes durch Bündelung des Feldes.

Die Höhe der Tragschienen 2a, 2b sollte möglichst klein sein, günstig ist eine Tragschienenhöhe kleiner 1/2 der Magnethöhe, denn die Feldlinien der Dauermagnete werden gebündelt und hierdurch die Steifigkeit des magnetischen Tragsystemes erhöht.

Die Anordnung sollte so gewählt werden, dass die weichmagnetischen Tragschienen 2a, 2b im Gleichgewichtszustand, in dem die magnetische Tragkraft F(z) betragsgleich der durch Belastung der Magnetreihe 1 mit dem Türflügel 5 hervorgerufenen Gewichtskraft F_{g} ist, vertikal unsymmetrisch um die Magnetreihe 1 liegen und die Magnetreihe 1 sollte möglichst kontinuierlich sein, um Rastkräfte in Bewegungsrichtung, d. h. in x-Richtung, zu vermeiden.

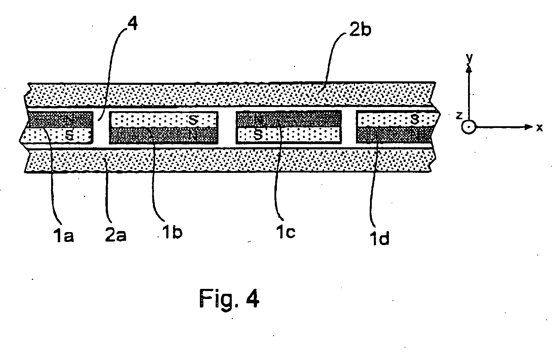

In Figur 4 ist eine Schnittdarstellung einer Aufsicht der in Figur 1a nach einer Schnittlinie A-A gezeigten Trageinrichtung nach der ersten bevorzugten Ausführungsform der Erfindung gezeigt. Es ist zu erkennen, dass die Magnetreihe 1 aus Einzelmagneten 1a, 1b, 1c, 1d besteht, die mit abwechselnder Magnetisierungsrichtung zwischen den beiden seitlich angeordneten Tragschienen 2a, 2b angeordnet sind, die aus einem weichmagnetischen Material bestehen. In dieser Ausführungsform, in der die Tragschienen 2a, 2b den feststehenden Teil der erfindungsgemäßen Trageinrichtung bilden, sind die Einzelmagnete 1a, 1b, 1c, 1d zur Bildung der Magnetreihe 1 an dem beweglichen Tragschlitten 4 befestigt und können zwischen den Schienen 2a, 2b in x- und z-Richtung verschoben werden. Bei einer vertikalen Verschiebung, d. h. einer Verschiebung in z-Richtung, um einen kleinen Weg, ca. 3-5 mm, aus der Null-Lage, d. h. der geometrischen Symmetrielage, ergibt sich, bedingt durch die Verwendung äußerst starker Dauermagnete, z. B. aus Nd-Fe-B, eine erhebliche Rückstellkraft, die zum Tragen eines Schiebetürflügels 5 mit einem Gewicht von ca. 80 kg/m geeignet ist. In der in Figur 4 gezeigten Anordnung, bei der die Dauermagnete 1a, 1b, 1c, 1d mit abwechselnder Magnetisierungsrichtung zwischen den beiden Tragschienen 2a, 2b angeordnet sind, wirkt sich der Feldschluss durch die Tragschienen 2a, 2b bei wechselseitiger Magnetisierungsrichtung der nebeneinander angeordneten Magnete positiv verstärkend aus.

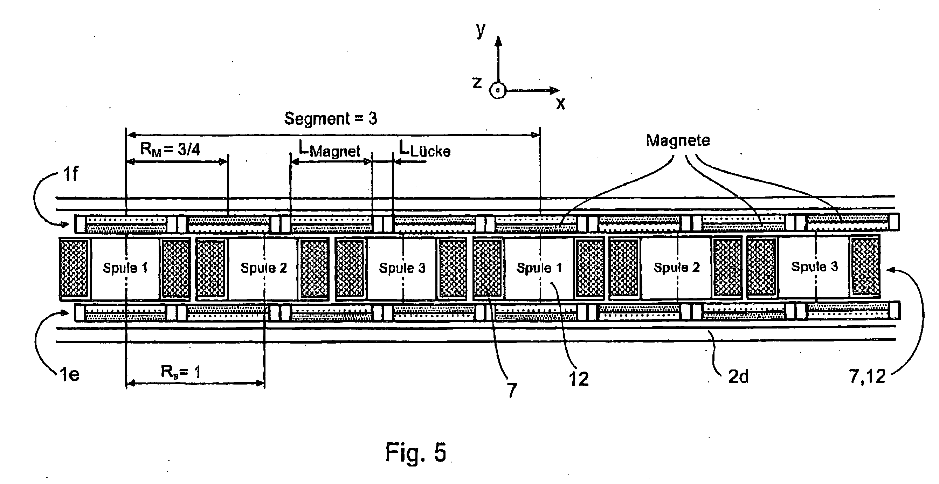

Die Figur 5 zeigt zwei Antriebssegmente einer ersten bevorzugten Ausführungsform des erfindungsgemäß bevorzugt verwendeten Antriebssystemes, hier als kombiniertes magnetisches Trag- und Antriebssystem, in einer geschnittenen Aufsicht, bei der der erfindungsgemäß verwendete magnetische Linearantrieb auf die Magnetreihen 1e, 1f wirkt, die an einem nicht gezeigten Tragschlitten 4 befestigt sind. Die beiden Magnetreihen 1e, 1f weisen jeweils abwechselnd polarisierte Einzelmagnete auf, wobei die Polaritäten der in Querrichtung versetzt angeordneten Einzelmagnete der beiden Magnetreihen gleichgerichtet sind. Zwischen den Magnetreihen 1e, 1f sind Spulen 7 so angeordnet, dass sich ein jeweiliger Spulenkern 12 in Querrichtung, d. h. y-Richtung, erstreckt. Auf der den Spulen 7 mit Spulenkernen 12 abgewandten Seite der Magnetreihe 1 befindet sich jeweils ein Seitenbereich der Tragschiene 2d.

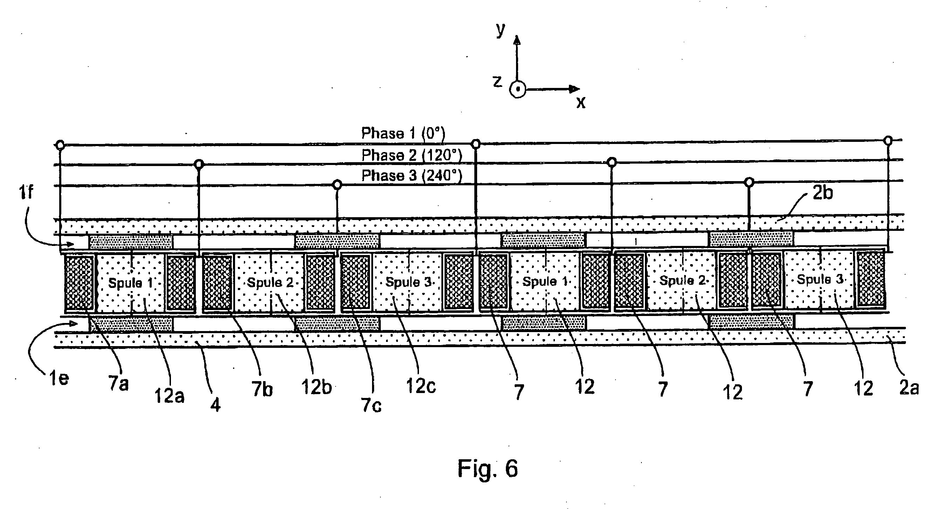

Um einen kontinuierlichen Vorschub der Magnetreihe 1 zu gewährleisten, sind die Stator-Spulen 7 mit ihren jeweiligen Spulenkernen 12 in unterschiedlichen relativen Positionen zum Raster der Dauermagnete 1, 1e, 1 f angeordnet. Je mehr unterschiedliche Relativpositionen ausgebildet werden, umso gleichmäßiger lässt sich die Schubkraft über den Verfahrweg realisieren. Da andererseits jede Relativposition einer elektrischen Phase eines für den Linearantrieb benötigten Ansteuersystemes zuzuordnen ist, sollten möglichst wenig elektrische Phasen zum Einsatz kommen. Aufgrund des zur Verfügung stehenden dreiphasigen Drehstromnetzes ist ein dreiphasiges System, wie es beispielhaft in Figur 6 gezeigt ist, sehr kostengünstig aufzubauen.

Hierbei besteht ein jeweiliges Antriebssegment und somit ein Spulenmodul der Linear-Antriebseinheit aus drei Spulen 7, 7a-c, die eine Ausdehnung von drei Längeneinheiten in Antriebsrichtung, d. h. x-Richtung, aufweisen, wobei also zwischen Mittelpunkten benachbarter Spulenkerne 12 ein Raster R_{S} = 1 Längeneinheit liegt. Die Länge eines Magneten der Magnetreihe 1 in Antriebsrichtung und die Länge der zwischen den Einzelmagneten der Magnetreihe 1 liegenden Lücke ist hier so gewählt, dass Länge eines Magneten L_{Magnet} + Länge einer Lücke L_{Lücke} = Magnetraster R_{M} = 3/4 Längeneinheit (= 3/4 R_{S}).

Figur 6 zeigt die Verschaltung der Spulen der in Figur 5 gezeigten beiden Antriebssegmente der erfindungsgemäß bevorzugt verwendeten Linear-Antriebseinheit Hier ist eine erste Spule 7a mit einem ersten Spulenkern 12a zwischen eine erste Phase und eine zweite Phase eines aus drei Phasen bestehenden Drehstromsystemes angeschlossen, dessen drei Phasen gleichmäßig verteilt sind, also die zweite Phase bei 120° und eine dritte Phase bei 240° liegen, wenn die erste Phase bei 0° liegt. Die in positiver Antriebsrichtung, d. h. +x-Richtung, neben der ersten Spule 7a mit Spulenkern 12a liegende zweite Spule 7b mit Spulenkern 12b eines Antriebssegmentes der Linear-Antriebseinheit ist zwischen die zweite Phase und die dritte Phase geschaltet und die in positiver Antriebsrichtung, d. h. x-Richtung neben der zweiten Spule 7b mit Spulenkern 12b liegende dritte Spule 7c mit Spulenkern 12c ist zwischen die dritte Phase und die erste Phase geschaltet. Neben einem solchen Antriebssegment der Linear-Antriebseinheit liegende Antriebssegmente der Linear-Antriebseinheit sind in gleicher Weise an die drei Phasen des Drehstromsystemes arigeschlossen.

Ordnet man dem durch die Dauermagnete gebildeten Polraster, analog zur Anordnung in einem zweipoligen Gleichstrommotor, Phasenwinkel zu, so lassen sich die linearen Spulenanordnungen in einem kreisförmigen Phasendiagramm abbilden. Da sich dieses sowohl magnetisch als Antriebswirkung auf die Dauermagnete als auch elektrisch als Ansteuerung der Spulen interpretieren lässt, kann durch dieses Diagramm der Zusammenhang zwischen Schaltzuständen und Antriebswirkung einheitlich beschrieben werden.

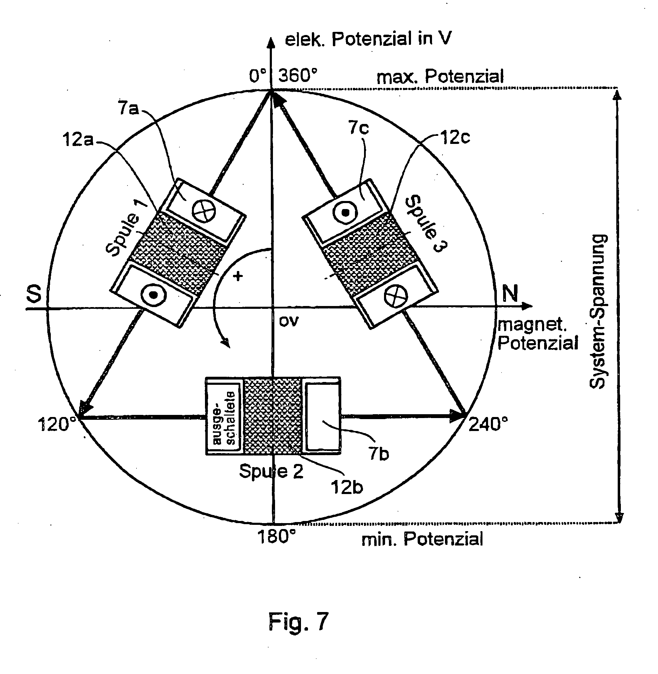

Ein solches kreisförmiges Phasendiagramm mit eingezeichneten Spulen ist in Figur 7 gezeigt. Hier ist auf der Ordinate das elektrische Potential in V und auf der Abszisse das magnetische Potential angegeben. Ein Kreis um den Ursprung dieses Koordinatensystemes, der ein Nullpotential sowohl für das elektrische Potential als auch das magnetische Potential darstellt, repräsentiert die Phasenlagen der an den jeweiligen Spulen anliegenden Spannung, wobei eine 0°-Phasenlage bei dem Schnittpunkt des Kreises mit der positiven Ordinate gegeben ist und sich die Phase im Uhrzeigersinn zu einer 90°-Phasenlage in dem Schnittpunkt des Kreises mit der negativen Abszisse, der das magnetische Potential des Südpols darstellt, eine 180°-Phasenlage in dem Schnittpunkt des Kreises mit der negativen Ordinate, der das minimale Spannungspotential darstellt, einer 270°-Phasenlage in dem Schnittpunkt des Kreises mit der positiven Abszisse, der das magnetische Potential des Nordpols darstellt, bis zu einer 360°-Phasenlage, die gleich der 0°-Phasenlage ist, in dem Schnittpunkt des Kreises mit der positiven Ordinate, der das maximale Spannungspotential darstellt, ändert.

Wie in Figur 6 gezeigt, ist eine Beziehung gegeben, bei der die erste Spule 7a mit Magnetkern 12a zwischen einer 0°-Phasenlage und einer 120°-Phasenlage, die zweite Spule 7b mit Magnetkern 12b zwischen einer 120°-Phasenlage und einer 240°-Phasenlage und die dritte Spule 7c mit Magnetkern 12c zwischen einer 240°-Phasenlage und einer 360°-Phasenlage liegen. Bei Drehstrombetrieb drehen sich nun die Zeiger dieser Spulen entsprechend der Wechselfrequenz des Drehstromes im Gegenuhrzeigersinn, wobei jeweils eine der elektrischen Potentialdifferenz zwischen den auf die Ordinate projizierten Anfangs- und Endpunkten des Zeigers entsprechende Spannung an den Spulen anliegt.

Bei der magnetischen Interpretation des Phasendiagrammes entspricht ein Phasendurchlauf von 180° einer Verschiebung des Läufers um den Abstand zwischen den Mittelpunkten zweier benachbarter Magnete, also dem Magnetraster R_{M}. Durch die abwechselnde Polarisierung der Magnete im Läufer wird bei einer Verschiebung um das Magnetraster R_{M} ein Polwechsel ausgeführt. Nach einem 360°-Phasendurchlauf beträgt die Läuferverschiebung zwei R_{M}. Hierbei befinden sich die Magnete relativ zum Raster R_{S} der Statorspulen wieder in Ausgangsposition, vergleichbar mit einer 360°-Umdrehung des Rotors eines zweipoligen Gleichstrommotors.

Für die elektrische Interpretation des Phasendiagrammes wird die Ordinate betrachtet, auf der das anliegende elektrische Spannungspotential dargestellt ist. Bei 0° liegt das maximale Potential, bei 180°, das minimale Potential und bei 90° bzw. 270° ein mittleres Spannungspotential an. Wie zuvor erwähnt, werden die Spulen im Diagramm durch Pfeile dargestellt, deren Anfangs- und Endpunkte die Kontaktierungen darstellen. Die jeweils anliegende Spulenspannung kann durch Projektion von Start- und Endpunkt der Pfeile auf der Potentialachse abgelesen werden. Durch die Pfeilrichtung wird die Stromrichtung und hierdurch die Magnetisierungsrichtung der Spule festgelegt.

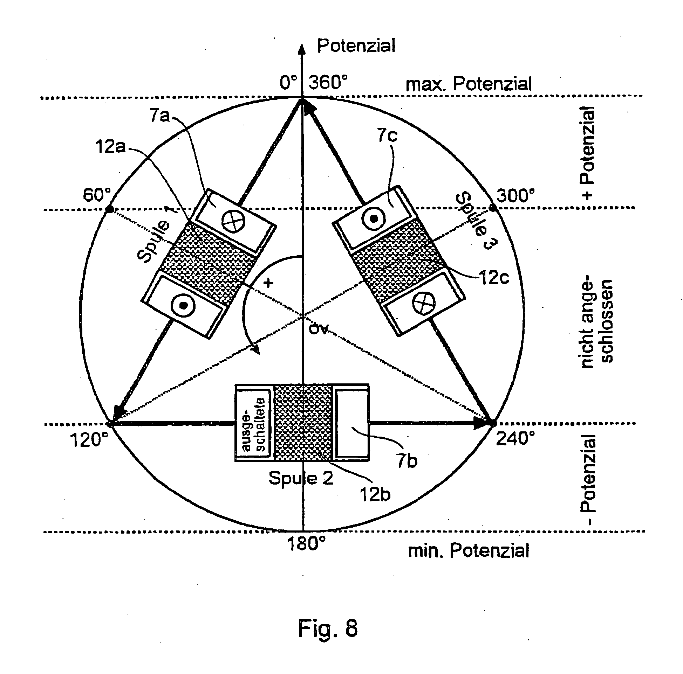

Anstelle einer kontinuierlichen sinusförmigen Spannungsquelle, die ein Phasendiagramm gemäß Figur 7 aufweist, kann aus Kostengründen auch eine Steuerung mit Rechteck-Charakteristik eingesetzt werden. In einem entsprechenden Phasendiagramm, das in Figur 8 gezeigt ist, ist die Rechteck-Charakteristik durch Schalfischwellen dargestellt. Hierbei können die Phasenanschlüsse jeweils die drei Zustände Pluspotential, Minuspotential und potentialfrei einnehmen. Dabei liegt das Pluspotential z. B. in einem Bereich zwischen 300° und 60° und das Minuspotential in einem Bereich von 120° bis 240° an und die Bereiche zwischen 60° und 120° sowie 240° und 300° stellen den potentialfreien Zustand dar, in dem die Spulen nicht angeschlossen sind. Bei der Rechteckspannung-Ansteuerung ist der im Vergleich zur Sinus-Steuerung ungleichmäßigere Schub nachteilig.

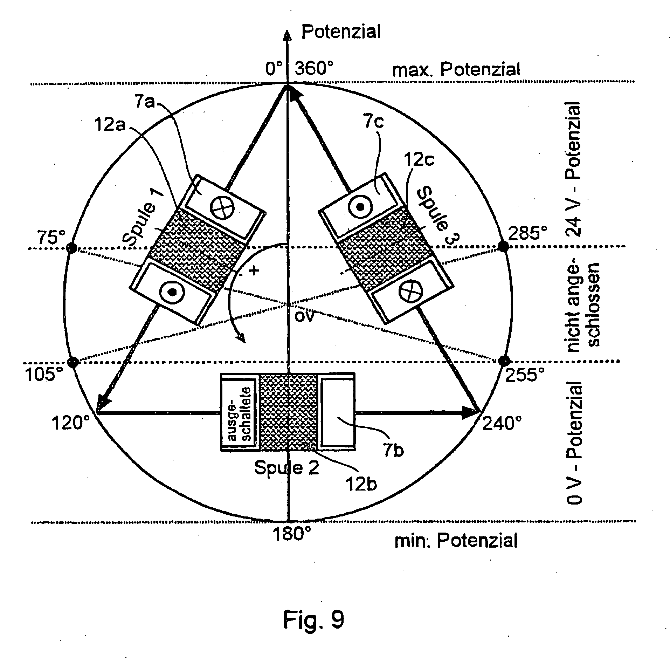

Es lässt sich natürlich noch eine große Zahl weiterer Spulerikonfigurationen und Potentialverteilungen aufbauen, z. B. die in Figur 9 gezeigte Potentialverteilung, bei der ein minimales Potential von 0 V in einem Bereich zwischen 105° und 255°, ein maximales Potential von 24 V in einem Bereich von 285° bis 75° und potentialfreie Bereiche von 75° bis 105° und von 255° bis 285° vorliegen.

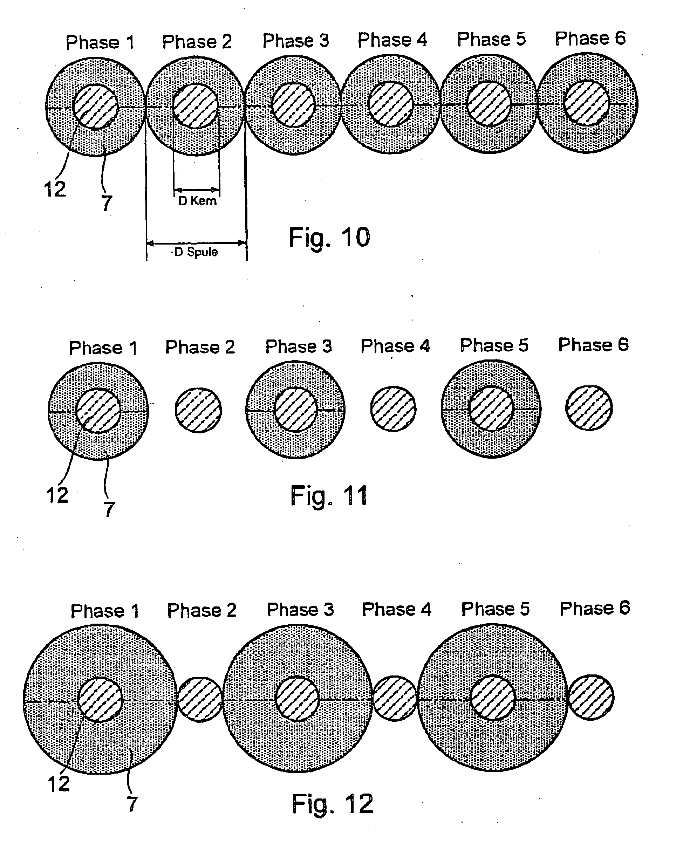

Die Figur 10 zeigt eine Anordnung einer Spulenanordnung bei einer Schiebetür nach dem Stand der Technik. Hier sind auf jedem Spulenkern 12 der Spulenanordnung Einzelspulen 7 vorgesehen. Die Spulenkerne 12 weisen einen Durchmesser D_{Kem} und die Einzelspulen 7 weisen einen Durchmesser D_{Spule}=2* D_{Kem} auf, wobei der Abstand zwischen zwei Spulenkemen etwa D_{Kem} entspricht, d. h. zwei benachbarte Einzelspulen 7 stoßen aneinander.

Die Figur 11 zeigt eine beispielhafte Anordnung einer Spulenanordnung bei einer Schiebetür.

Hier sind auf jedem zweiten Spulenkern 12 der Spulenanordnung Einzelspulen 7 vorgesehen. Die Spulenkerne 12 weisen einen Durchmesser D_{Kern} und die Einzelspulen 7 weisen einen Durchmesser D_{Spule}=2* D_{Kem} auf, wobei der Abstand zwischen zwei Spulenkernen etwa D_{Kem} entspricht. Daraus folgt, dass aufgrund der halbierten Spulenzahl lediglich die halbe Kupfermenge benötigt wird. Nachteilig ist, dass im Vergleich mit der in Figur 10 gezeigten Anordnung nach dem Stand der Technik auch nur die halbe Spulenquerschnittsfläche durchflutet wird, wodurch sich geringere Schubkräfte ergeben.

Die Figur 12 zeigt eine Anordnung einer Spulenanordnung bei einer Schiebetür nach einer bevorzugten Ausführungsform der Erfindung. Hier sind auf jedem zweiten Spulenkern 12 der Spulenanordnung Einzelspulen 7 vorgesehen. Die Spulenkerne 12 weisen einen Durchmesser D_{Kem} und die Einzelspulen 7 weisen einen Durchmesser D_{Spule}=3* D_{Kem} auf, wobei der Abstand zwischen zwei Spulenkernen etwa D_{Kem} entspricht. Daraus folgt, dass aufgrund der halbierten Spulenzahl und dem vergrößerten Spulendurchmesser lediglich 3/4 der Kupfermenge benötigt wird. Der gemäß der ersten bevorzugten Ausführungsform bestehende Nachteil, dass dort im Vergleich mit der in Figur 10 gezeigten Anordnung nach dem Stand der Technik auch nur die halbe Spulenquerschnittsfläche durchflutet wird, besteht hier nicht, da die durchflutete Spulenquerschnittsfläche mit der in Figur 10 gezeigten Anordnung nach dem Stand der Technik gleich ist, wodurch sich die gleichen Schubkräfte ergeben.

Natürlich kann die erfindungsgemäße Schiebetür mit dem erfindungsgemäßen magnetischen Antriebssystem auch so ausgestaltet sein, dass die lediglich vorzugsweise magnetisch gelagerte Trageinrichtung von dem erfindungsgemäßen Antriebssystem getrennt vorgesehen ist.

### Bezugszeichenliste

- 1, 1e, 1f: Magnetreihe
- 1a-d: Magnet
- 2: Tragelement
- 2a, 2b, 2d: Tragschiene
- 3: Führungselement
- 4: Tragschlitten
- 5: Türflügel
- 6: Gehäuse
- 7, 7a-c: Spule
- 12: Spulenkem
- D_{Spule}: Spulendurchmesser
- D_{Kern}: Spulenkerndurchmesser

## Patentansprüche

1. Schiebetür mit einem magnetischen Antriebssystem für mindestens einen Türflügel (5), mit einer Linear-Antriebseinheit, die
• mindestens eine in Antriebsrichtung angeordnete Magnetreihe (1, 1e, 1f), deren Magnetisierung in ihrer Längsrichtung in bestimmten Abständen das Vorzeichen wechselt, und
• mindestens eine Spulenanordnung aufweist, die bei entsprechender Ansteuerung eine Wechselwirkung mit der mindestens einen Magnetreihe (1; 1e; 1f) bewirkt, die Vorschubkräfte hervorruft,
**dadurch gekennzeichnet, dass**
• die Spulenanordnung eine Anzahl von Spulenkernen (12) aufweist, von denen nur jeder zweite mit einer Spulenwicklung (7) versehen ist, und
• die Spulenkerne (12) einen Durchmesser D_{Kern} aufweisen und die Einzelspulen (7) einen Durchmesser D_{Spule} = 3*D_{Kern} aufweisen, wobei der Abstand zwischen zwei Spulenkernen etwa D_{Kern} entspricht.

2. Schiebetür nach Anspruch 1, **dadurch gekennzeichnet, dass** die Spulenanordnung dreiphasig angesteuert wird.

3. Schiebetür nach Anspruch 1 oder 2, **dadurch gekennzeichnet, dass** die mindestens eine Magnetreihe (1, 1e, 1f) aus einem oder mehreren Hochleistungsmagneten, vorzugsweise Seltenerden-Hochleistungsmagneten, weiter vorzugsweise vom Typ NeFeB oder Sm₂Co, besteht.

4. Schiebetür nach einem der vorstehenden Ansprüche, **dadurch gekennzeichnet, dass** die Schiebetür als Bogenschiebetür oder Horizontal-Schiebewand ausgebildet ist.

## Claims

1. A sliding door with a magnetic drive system for at least one door leaf (5), with a linear drive unit, which features
• at least one row of magnets (1, 1e, 1f), disposed in driving direction, the magnetization thereof in the longitudinal direction thereof reversing the sign at predetermined intervals, and
• at least one coil arrangement, which, in case of appropriate activation, causes an interaction with the at least one row of magnets (1; 1e; 1f) generating advance forces,
**characterized in that**
• the coil arrangement features a number of coil cores (12), only each second one of them being provided with a coil winding (7), and
• the coil cores (12) feature a diameter D_{core} and the individual coils (7) feature a diameter D_{coil} = 3*D_{core}, wherein the distance between two coil cores approximately corresponds to D_{core}.

2. The sliding door according to claim 1, **characterized in that** the coil arrangement has a three-phase activation.

3. The sliding door according to claim 1 or 2, **characterized in that** the at least one row of magnets (1, 1e, 1f) consists of one or more high-performance magnets, preferably of rare earth high-performance magnets, and more preferably of the type NeFeB or Sm₂Co.

4. The sliding door according to any of the preceding claims, **characterized in that** the sliding door is configured as a curved sliding door or as a horizontal sliding wall.

## Revendications

1. Porte coulissante avec un système d'entraînement magnétique pour au moins un vantail de porte (5), avec un entraînement linéaire, lequel présente
• au moins une rangée d'aimants (1, 1e, 1f) agencée en la direction d'entraînement, dont la magnétisation change de signe à certaines intervalles en sa direction longitudinale, et
• au moins un agencement de bobines, qui, par une activation appropriée, provoque une interaction avec ladite au moins une range d'aimants (1; 1e; 1f) causant des forces d'avance,
**caractérisée en ce que**
• l'agencement de bobines présente un nombre de noyaux de bobines (12) dont seulement un sur deux est pourvu d'un enroulement à bobinage (7), et
• les noyaux de bobine (12) présentent un diamètre D_{noyau} et les bobines individuelles (7) présentent un diamètre D_{bobine} = 3*D_{noyau}, la distance entre deux noyaux de bobines correspondant environ à D_{noyau}.

2. Porte coulissante selon la revendication 1, **caractérisée en ce que** l'agencement de bobine est à contrôle tri-phases.

3. Porte coulissante selon la revendication 1 ou 2, **caractérisée en ce que** ladite au moins une rangée d'aimants (1, 1e, 1f) consiste en un ou plusieurs aimants à haute puissance, de préférence d'aimant à haute puissance de terres rares, et encore plus préféré du type NeFeB ou Sm₂Co.

4. Porte coulissante selon l'une des revendications précédentes, **caractérisée en ce que** la porte coulissante est aménagée comme porte coulissante en arc ou paroi coulissante horizontal.
